# EUROPÄISCHE PATENTSCHRIFT

(11) **EP 2 631 847 B1**
(45) Veröffentlichungstag und Bekanntmachung des Hinweises auf die Patenterteilung: **06.07.2016**
(21) Anmeldenummer: 13154910.7
(22) Anmeldetag: 12.02.2013
(51) Int. Cl.: G06K 17/00

(54) **Dokumentenpuffer für ein Identitätsdokument**
Document buffer for an identity document
Antémémoire de document pour un document d'identité

(30) Priorität: 22.02.2012 DE 102012202740
(43) Veröffentlichungstag der Anmeldung: 28.08.2013
(73) Patentinhaber: Bundesdruckerei GmbH, 10969 Berlin (DE)
(72) Erfinder: Vonrüty, Mario, Dipl.-Ing., 10247 Berlin (DE); Baudach, Steffen, Dr., 13189 Berlin (DE)
(74) Vertreter: Patentship Patentanwaltsgesellschaft mbH

(56) Entgegenhaltungen:
- WO-A1-2006/068382
- DE-B3-102005 054 300
- GB-A- 2 424 106
- ANONYMOUS: "USB/IP PROJECT", 20110223 , 23. Februar 2011 (2011-02-23), Seiten 1-5, XP007921875, Gefunden im Internet: URL:http://usbip.sourceforge.net/ [gefunden am 2013-05-10]

## Beschreibung

Die vorliegende Erfindung betrifft einen Dokumentenpuffer für zumindest ein Identitätsdokument.

Der Internetartikel "Anonymus: "USB/IP Projekt", 2011 02 23, 23. Februar 2011 (2011-02-23), Seiten 1-5, XP 007921875, gefunden im Internet: URL: http://usbip.sourceforge.net/ [gefunden am 2013-05-10]" zeigt allgemein, wie auf ein USB-Gerät über ein IP-Netzwerk zugegriffen werden kann. Hierbei soll das USB-Protokoll in TCP/IP-Pakete eingekapselt werden.

Die Offenlegungsschrift GB 24 24 106 A zeigt einen Netzwerkscanner, wobei die Scandaten in TCP/IP-Pakete konvertiert werden, sodass diese über ein Netzwerk verschickt werden können.

Die Offenlegungsschrift WO 2006/068382 A1 zeigt ein RFID-Interface, das zwischen RFID-Lesegeräten und Anwendungen geschaltet ist. Hierbei ist ein Protokoll-Prozessor vorgesehen, der ein RFID-Protokoll der Lesegeräte in ein Protokoll der Anwendungen und umgekehrt konvertiert.

Bei einer Herstellung und elektronischen Personalisierung von Dokumenten mit einem Chip werden in einem Gesamtproduktionsprozess sequentiell verschiedene Produktionsschritte durchgeführt, wie beispielsweise ein Aufbringen oder Einbringen von Farben und/oder Pigmenten, ein aufeinander Anordnen von verschiedenen Schichtlagen sowie ein Verbinden dieser Schichtlagen mittels eines geeigneten Verfahrens.

Die elektronische Personalisierung ist jedoch aufgrund des erforderlichen Einsatzes von kryptografischen Zugriffsalgorithmen langsamer als die restliche Produktion des Dokumentenkörpers. Daher wird die elektronische Personalisierung mehrerer Dokumente zeitlich parallel ausgeführt, wie es in der Druckschrift DE 10 2005 054 300 ausgeführt ist.

Zum Zwecke der Personalisierung wird im rechten Winkel zu dem im Übrigen waagerecht ablaufenden Produktions- und Transportprozess ein durch senkrecht angeordnete Dokumenthalterungen gebildeter und senkrecht verfahrbarer Dokumentenpuffer eingesetzt, der in der Fachsprache als Personalisierungs- und Verifikationsturm bezeichnet wird. In den Dokumentenhalterungen sind jeweils Schreib-Lese-Geräte angeordnet, welche jeweils über ein Kabel mit einem zentralen Prozessrechner verbunden sind.

Die Handhabung der Kabel ist jedoch aufwändig und kompliziert. Darüber hinaus können die Kabel verhaken und sich gegenseitig elektrisch stören. Aufgrund des hohen Kabelgewichts muss im Allgemeinen ein Motor vorgesehen werden, um den Dokumentenpuffer zu bewegen.

Es ist daher die der Erfindung zugrundeliegende Aufgabe, ein effizientes Konzept zum Zugreifen auf ein Identitätsdokument zu schaffen.

Diese Aufgabe wird in Abgrenzung zu dem Gegenstand der Druckschrift DE 10 2005 054 300 durch die Merkmale der unabhängigen Ansprüche gelöst. Vorteilhafte Weiterbildungsformen sind Gegenstand der Beschreibung, der Zeichnungen sowie der abhängigen Ansprüche.

Gemäß einem Aspekt betrifft die Erfindung einen Dokumentenpuffer für zumindest ein Identitätsdokument oder für eine Mehrzahl von Identitätsdokumenten, mit einer Anzahl von Verarbeitungsaufnahmen zur Aufnahme von jeweils einem Identitätsdokument, wobei jede Verarbeitungsaufnahme eine Zugriffseinrichtung zum Zugreifen auf ein Identitätsdokument und eine der jeweiligen Zugriffseinrichtung zugeordnete Kommunikationsschnittstelle für die Kommunikation gemäß einer ersten Übertragungstechnologie aufweist und einem Netzwerkverteiler mit einer Anzahl von Verteilerschnittstellen für die Kommunikation gemäß der ersten Übertragungstechnologie und mit einer Netzwerkschnittstelle für die Kommunikation gemäß einer zweiten Übertragungstechnologie, wobei jeweils eine Kommunikationsschnittstelle einer Verteilerschnittstelle zugeordnet ist, und wobei der Netzwerkverteiler ausgebildet ist, ein an eine Verteilerschnittstelle anlegbares erstes Kommunikationssignal gemäß der ersten Übertragungstechnologie in ein zweites Kommunikationssignal gemäß der zweiten Übertragungstechnologie umzuwandeln und das zweite Kommunikationssignal an der Netzwerkschnittstelle auszugeben, oder ein an die Netzwerkschnittstelle anlegbares zweites Kommunikationssignal gemäß der zweiten Übertragungstechnologie in ein erstes Kommunikationssignal gemäß der ersten Übertragungstechnologie umzuwandeln und das erste Kommunikationssignal an einer Verteilerschnittstelle auszugeben. Der Dokumentenpuffer ermöglicht daher ein effizientes Zugreifen auf das jeweilige Identitätsdokument.

Dadurch wird der technische Vorteil erreicht, dass dem Dokumentenpuffer über ein einzelnes an der Netzwerkschnittstelle angeschlossenes Kabel die Signale für eine Mehrzahl von Zugriffseinrichtungen zugeführt werden können und diese Signale über eine besonders geeignete zweite Übertragungstechnologie an die jeweiligen Zugriffseinrichtungen verteilt werden können. Dadurch sinkt der Aufwand für die Verkabelung, während sich die Einsatz- und Erweiterungsmöglichkeiten des Dokumentenpuffers durch Anschließen einer unterschiedlichen Anzahl von Verarbeitungsaufnahmen erhöhen. Weiter entsteht der Vorteil, dass Einschränkungen hinsichtlich einer Kabellänge bei der Anbindung des Dokumentenpuffers leicht durch eine geeignete Wahl der Übertragungstechnologie überwunden werden können. Durch den geringeren Verkabelungsaufwand sinkt das Gewicht des Dokumentenpuffers, den der Dokumentenpuffer gemäß einer Ausführungsform realisiert. Ein derartiger Dokumentenpuffer zeichnet sich durch gute Dynamik und flexible Konfigurationsmöglichkeiten aus, und kann je nach Bedarf mit einer unterschiedlichen Anzahl von Dokumenthalterungen zur parallelen Personalisierung oder Verifikation von Dokumenten ausgestattet werden.

Das Identitätsdokument kann eines der folgenden Identitätsdokumente, mit oder ohne Elektronik, sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Banknote, Scheck, Postwertzeichen, oder ein anderes Zahlungsmittel, beispielsweise eine Bankkarte oder Kreditkarte. Das Identitätsdokument kann ein- oder mehrlagig bzw. papier- und/oder kunststoffbasiert sein. Das Identitätsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

In einer Ausführungsform ist die erste Übertragungstechnologie eine der folgenden Übertragungstechnologien: Universal Serial Bus (USB), wobei die Kommunikationsschnittstellen und die Verteilerschnittstellen drahtgebundene oder drahtlose USB-Schnittstellen sind; Serial Advanced Technology Attachment Protokoll (SATA), wobei die Kommunikationsschnittstellen und die Verteilerschnittstellen drahtgebundene oder drahtlose SATA-Schnittstellen sind; RS232, wobei die Kommunikationsschnittstellen und die Verteilerschnittstellen drahtgebundene oder drahtlose RS232-Schnittstellen sind; RS485, wobei die Kommunikationsschnittstellen und die Verteilerschnittstellen drahtgebundene oder drahtlose RS485-Schnittstellen sind; I²C, wobei die Kommunikationsschnittstellen und die Verteilerschnittstellen drahtgebundene oder drahtlose I²C -Schnittstellen sind; Profibus, wobei die Kommunikationsschnittstellen und die Verteilerschnittstellen drahtgebundene oder drahtlose Profibus-Schnittstellen sind; AS-Interface, wobei die Kommunikationsschnittstellen und die Verteilerschnittstellen drahtgebundene oder drahtlose ASI-Schnittstellen (ASI: Aktor Sensor Interface) sind; Interbus, wobei die Kommunikationsschnittstellen und die Verteilerschnittstellen drahtgebundene oder drahtlose Interbus-Schnittstellen sind; FlexRay, wobei die Kommunikationsschnittstellen und die Verteilerschnittstellen drahtgebundene oder drahtlose FlexRay-Schnittstellen sind; LIN-Bus, wobei die Kommunikationsschnittstellen und die Verteilerschnittstellen drahtgebundene oder drahtlose LIN-Bus-Schnittstellen sind; FAIS, wobei die Kommunikationsschnittstellen und die Verteilerschnittstellen drahtgebundene oder drahtlose FAIS-Schnittstellen sind; IrDa, wobei die Kommunikationsschnittstellen und die Verteilerschnittstellen drahtgebundene oder drahtlose IrDa-Schnittstellen sind; MODBUS, wobei die Kommunikationsschnittstellen und die Verteilerschnittstellen drahtgebundene oder drahtlose MODBUS-Schnittstellen sind; CAN, wobei die Kommunikationsschnittstellen und die Verteilerschnittstellen drahtgebundene oder drahtlose CAN-Schnittstellen sind; Feldbus, wobei die Kommunikationsschnittstellen und die Verteilerschnittstellen drahtgebundene oder drahtlose Feldbus-Schnittstellen sind; und
Thunderbolt, wobei die Kommunikationsschnittstellen und die Verteilerschnittstellen drahtgebundene oder drahtlose Thunderbolt-Schnittstellen sind. Dadurch wird der technische Vorteil erreicht, dass als erste Übertragungstechnologie eine entwickelte Technologie nach einem bestimmten Standard verwendet wird.

In einer weiteren Ausführungsform ist die zweite Übertragungstechnologie eine der folgenden Übertragungstechnologien: Ethernet, wobei die Netzwerkschnittstelle eine Ethernet-Schnittstelle ist; Wireless Local Area Network (WLAN), wobei die Netzwerkschnittstelle eine WLAN-Schnittstelle ist; PowerLAN (dLAN), wobei die Netzwerkschnittstelle eine dLAN-Schnittstelle ist; oder Lichtwellenleiterübertragungstechnologie, wobei die Netzwerkschnittstelle eine Lichtwellenleiter-Schnittstelle ist. Dadurch wird beispielsweise der technische Vorteil erreicht, dass als zweite Übertragungstechnologie eine entwickelte Technologie nach einem bestimmten Standard verwendet wird.

In einer weiteren Ausführungsform weist der Netzwerkverteiler einen Netzwerkhub, insbesondere einen USB-Netzwerkhub, mit der Mehrzahl der Verteilerschnittstellen und einen Kommunikationswandler mit der Netzwerkschnittstelle auf, wobei der Kommunikationswandler ausgebildet ist, das erste Kommunikationssignal in das zweite Kommunikationssignal oder das zweite Kommunikationssignal in das erste Kommunikationssignal umzuwandeln. Dadurch wird beispielsweise der technische Vorteil erreicht, dass Standardkomponenten zur Herstellung des Dokumentenpuffers verwendet werden können und sich der technische Aufwand zur Herstellung des Dokumentenpuffers verringert.

In einer weiteren Ausführungsform ist der Kommunikationswandler ein USB-Ethernet-Wandler, insbesondere ein USB-Ethernet-Adapter oder USB-Ethernet-Port oder USB-Device-Server, oder ein RS232-Ethernet-Wandler ist, insbesondere ein RS232-Ethernet-Adapter oder RS232-Ethernet-Port. Dadurch wird beispielsweise ebenfalls der technische Vorteil erreicht, dass Standardkomponenten zur Herstellung des Kommunikationswandlers verwendet werden können und sich der technische Aufwand zur Herstellung des Dokumentenpuffers verringert.

In einer weiteren Ausführungsform sind die Identitätsdokumente mit Datenträgern versehen und jede Zugriffseinrichtung ist über eine Kommunikationsschnittstelle zum Zugreifen auf die jeweiligen Datenträger ansteuerbar.

In einer weiteren Ausführungsform weist jede Verarbeitungsaufnahme eine Mehrzahl von Zugriffseinrichtungen für die Kommunikation mit einem Datenträger oder einer Mehrzahl von Datenträgern eines Identitätsdokumentes für unterschiedliche Zugriffstechnologien, insbesondere für die kontaktlose und die kontaktbehaftete Zugriffstechnologie auf, wobei jede Verarbeitungsaufnahme eine Mehrzahl von Kommunikationsschnittstellen aufweist, wobei jeder Zugriffseinrichtung eine Kommunikationsschnittstelle zugeordnet ist, und wobei jeder Kommunikationsschnittstelle einer Verteilerschnittstelle zugeordnet ist. Dadurch wird beispielsweise der technische Vorteil erreicht, dass für einen Datenträger unterschiedliche Zugriffstechnologien oder Dokumente mit unterschiedlichen Datenträgern in dem Dokumentenpuffer verwendet werden können und sich die Flexibilität des Dokumentenpuffers weiter erhöht.

In einer weiteren Ausführungsform formt die Mehrzahl der Verarbeitungsaufnahmen eine erste Verarbeitungsgruppe, wobei der Dokumentenpuffer eine weitere Mehrzahl von Verarbeitungsaufnahmen mit jeweils einer weiteren Kommunikationsschnittstelle für die Kommunikation gemäß der ersten Übertragungstechnologie aufweist, wobei die weitere Mehrzahl der Verarbeitungsaufnahmen eine zweite Verarbeitungsgruppe formt; wobei der Netzwerkverteiler eine weitere Mehrzahl von Verteilerschnittstellen und eine weitere Netzwerkschnittstelle aufweist, wobei jeweils einer weiteren Kommunikationsschnittstelle jeweils eine weitere Verteilerschnittstelle zugeordnet ist, und wobei der Netzwerkverteiler ausgebildet ist, ein an eine weitere Verteilerschnittstelle anlegbares erstes Kommunikationssignal gemäß der ersten Übertragungstechnologie in ein zweites Kommunikationssignal gemäß der zweiten Übertragungstechnologie umzuwandeln und das zweite Kommunikationssignal an der weiteren Netzwerkschnittstelle bereitzustellen, oder ein an die weitere Netzwerkschnittstelle anlegbares zweites Kommunikationssignal gemäß der zweiten Übertragungstechnologie in ein erstes Kommunikationssignal gemäß der ersten Übertragungstechnologie umzuwandeln und das erste Kommunikationssignal an einer weiteren Verteilerschnittstelle auszugeben. Dadurch wird beispielsweise der technische Vorteil erreicht, dass sich die Anschlussmöglichkeiten des Dokumentenpuffers erhöhen.

In einer weiteren Ausführungsform umfasst der Netzwerkverteiler einen weiteren Netzwerkhub, insbesondere einen USB-Netzwerkhub, mit der weiteren Mehrzahl der Verteilerschnittstellen und einen weiteren Kommunikationswandler mit der weiteren Netzwerkschnittstelle, wobei der Kommunikationswandler ausgebildet ist, das erste Kommunikationssignal in das zweite Kommunikationssignal oder das zweite Kommunikationssignal in das erste Kommunikationssignal umzuwandeln. Dadurch wird beispielsweise der technische Vorteil erreicht, dass auf besonders einfache Weise durch die Verwendung von Standardkomponenten die Anschlussmöglichkeiten erhöhen.

In einer weiteren Ausführungsform weist der Dokumentenpuffer ferner einen Netzwerkschalter, insbesondere einen Ethernet-Switch, mit zumindest einer Eingangs/Ausgangsschnittstelle auf, welche mit der Netzwerkschnittstelle verbunden ist. Dadurch wird beispielsweise der technische Vorteil erreicht, dass die jeweils nur an die vorgesehene Verarbeitungsaufnahme geleitet werden. Darüber hinaus kann der Dokumentenpuffer über die Eingangs/Ausgangsschnittstelle direkt mit WLAN, DLAN oder Glasfaser verbunden werden. Ferner kann die Eingangs/Ausgangsschnittstelle mit einem Steuer-PC verbunden werden, welcher über eine weitere Schnittstelle zur datentechnischen Systemanbindung, beispielsweise an ein Maschinensystem, verwendet werden kann.

In einer weiteren Ausführungsform weist der Dokumentenpuffer ferner eine Datenverarbeitungseinrichtung auf, welche mit der Netzwerkschnittstelle verbindbar und ausgebildet ist, selektiv die Zugriffseinrichtungen über die Kommunikationsschnittstellen zum Zugriff auf die Identitätsdokumente, insbesondere zum Zugriff auf Datenträger der Identitätsdokumente, anzusteuern. Dadurch wird beispielsweise der technische Vorteil erreicht, dass neben einer Weiterleitung von Daten auch eine Steuerung der Zugriffseinrichtungen erfolgt.

In einer weiteren Ausführungsform sind die Zugriffseinrichtungen elektronische Schreib-Lesegeräte oder optische Lesegeräte, insbesondere optische Lesegeräte zur Bildaufnahme im sichtbaren Lichtbereich, im UV-Lichtbereich oder im Infrarot-Lichtbereich oder eine Sensorik im sichtbaren Lichtbereich, im UV-Lichtbereich oder im Infrarot-Lichtbereich, oder eine mechanische oder induktive Sensorik im Bereich physikalischer Messtechnik. Dadurch wird beispielsweise der technische Vorteil erreicht, dass ein Zugriff besonders sicher erfolgt.

Gemäß einem weiteren Aspekt betrifft die Erfindung die Verwendung des erfindungsgemäßen Dokumentenpuffers zur Personalisierung, zur Überprüfung von Personalisierung von Identitätsdokumenten, zur Analyse von Daten von Identitätsdokumenten oder zur Überprüfung der Echtheit von Identitätsdokumenten gelöst. Dadurch lassen sich die gleichen Vorteile erreichen wie durch der Dokumentenpuffer nach dem ersten Aspekt.

Gemäß einem weiteren Aspekt betrifft die Erfindung ein Verfahren zum Zugreifen auf elektronisch auslesbare Identitätsdokumente, welche in einer Mehrzahl von Verarbeitungsaufnahmen angeordnet sind, wobei jede Verarbeitungsaufnahme eine Zugriffseinrichtung zum Zugriff auf ein Identitätsdokument und eine dem jeweiligen Schreib-Lesegerät zugeordnete Kommunikationsschnittstelle für die Kommunikation gemäß einer ersten Übertragungstechnologie aufweist, wobei jeweils eine Kommunikationsschnittstelle einer Verteilerschnittstelle eines Netzwerkverteilers mit einer Mehrzahl von Verteilerschnittstellen für die Kommunikation gemäß der ersten Übertragungstechnologie und mit einer Netzwerkschnittstelle für die Kommunikation gemäß einer zweiten Übertragungstechnologie zugeordnet ist, und wobei ein an einer Verteilerschnittstelle anlegbares erstes Kommunikationssignal gemäß der ersten Übertragungstechnologie durch den Netzwerkverteiler in ein zweites Kommunikationssignal gemäß der zweiten Übertragungstechnologie umgewandelt und das zweite Kommunikationssignal an der Netzwerkschnittstelle bereitgestellt wird, oder ein an die Netzwerkschnittstelle anlegbares zweites Kommunikationssignal gemäß der zweiten Übertragungstechnologie durch den Netzwerkverteiler in ein erstes Kommunikationssignal gemäß der ersten Übertragungstechnologie umgewandelt und das erste Kommunikationssignal an einer Verteilerschnittstelle ausgegeben wird. Dadurch lassen sich ebenfalls die gleichen Vorteile erreichen wie durch der Dokumentenpuffer nach dem erstgenannten Aspekt.

Weitere Ausführungsbeispiele werden Bezug nehmend auf die beiliegenden Figuren erläutert. Es zeigen:
- Fig. 1: eine schematische Ansicht eines Dokumentenpuffers;
- Fig. 2: eine Netzwerktopologie mit dem Dokumentenpuffer; und
- Fig. 3: eine weitere Netzwerktopologie mit dem Dokumentenpuffer.

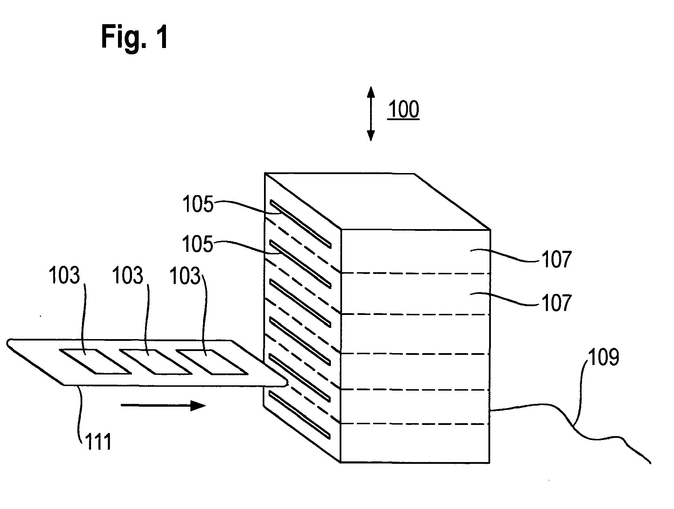

Fig. 1 zeigt einen Dokumentenpuffer 100 in Verbindung mit einer Produktionsstraße 111 für Identitätsdokumente 103.

Die Identitätsdokumente 103 können jeweils beispielweise einen nicht-flüchtigen elektronischen Datenspeicher umfassen, beispielsweise gebildet durch einen Chip. Der Chip auf dem Identitätsdokument 103 ist ein Prozessor mit Speicher-, Verarbeitungssowie kryptografischen Zugriffsalgorithmen. Durch die kryptografischen Zugriffsalgorithmen wird eine unbefugte Manipulation oder ein Lesen der Daten erschwert oder unmöglich gemacht. Die Identitätsdokumente 103 können beispielsweise Pässe, Personalausweise, oder Führerscheine sein.

Der Dokumentenpuffer 100 bildet einen Personalisierungs- oder Verifikationsturm, in dem die Identitätsdokumente 103 elektronisch beschrieben oder ausgelesen werden können. Beispielsweise werden bei einer Chipkartenpersonalisierung und -verifikation die Identitätsdokumente 103 in dem Dokumentenpuffer 100 elektronisch beschrieben oder elektronisch ausgelesen. Bei der Personalisierung kann im Allgemeinen jede Art von Individualisierung vorgenommen werden, insbesondere auch eine Verifikation der Personalisierung. In dem Dokumentenpuffer 100 können hierzu beispielsweise PCSC-RFID-Reader mit USB-Schnittstelle eingesetzt werden.

Zu dem Zweck der Personalisierung umfasst der Dokumentenpuffer 100 eine Mehrzahl von Verarbeitungsaufnahmen 107, die jeweils dazu vorgesehen sind, eines der Identitätsdokumente 103 über einen Schlitz oder Schacht 105 aufzunehmen. Die einzelnen Identitätsdokumente 103 werden im Rahmen des Produktionsprozesses nacheinander den Verarbeitungsaufnahmen 107 zugeführt. Dazu ist der Dokumentenpuffer 100 in der Höhe in der gezeigten Pfeilrichtung automatisch verfahrbar, so dass jeweils einer der Schächte 105 auf der gleichen Höhe wie die Produktionsstraße 111 liegt und das Identitätsdokument 103 in den entsprechenden Schacht 105 eingeführt werden kann.

Die Daten, die zum Beschreiben der Identitätsdokumente 103 durch die Verarbeitungsaufnahmen 107 verwendet werden, werden beispielsweise über ein Datenkabel 109 gemäß einem vorbestimmten Übertragungsstandard von einem nicht gezeigten Prozessrechner an den Dokumentenpuffer 100 übermittelt. Der Übertragungsstandard kann beispielsweise ein Ethernet-Protokoll sein, so dass ein Ethernet-Kabel als Anschluss für den Dokumententurm verwendet werden kann. Bei dem Datenkabel 109 kann es sich um ein elektrisch leitendes Kabel oder um einen Lichtwellenleiter handeln. Die Versorgung des Dokumentenpuffers 100 mit elektrischer Energie kann über eine separate Stromversorgung mit einem zusätzlichen Kabel oder gegebenenfalls auch über das Datenkabel 109 erfolgen.

Die Verarbeitungsaufnahmen 107 können kleine, über ein USB-Protokoll ansteuerbare Schaltungen einschließlich einer Antenne und/oder entsprechenden Kontakten umfassen. Die Schaltungen sind beispielsweise einzeln über einen im Inneren des Dokumentenpuffers 100 angeordneten USB-Hub ansteuerbar. Dazu umfasst der Dokumentenpuffer 100 einen USB-Ethernet-Umsetzer, der USB-seitig mit dem USB-Hub und gegenüber dem Prozessrechner mit dem Ethernet-Kabel 109 verbunden wird. An dem USB-Hub im Inneren des Dokumentenpuffers 100 können Schaltungen unterschiedlich vieler Verarbeitungsaufnahmen 107 angeschlossen werden, so dass der Dokumentenpuffer 100 freiskalierbar je nach Anzahl der parallel zu personalisierenden Dokumente und der Geschwindigkeit der Produktionsstraße konfiguriert werden kann.

Durch die Erfindung können mehrere USB-Reader zur Personalisierung und Verifikation innerhalb des Dokumentenpuffers 100 über geeignete USB-LAN-Umsetzer über ein Ethernet an einen Prozessrechner angebunden werden. Dadurch wird der Vorteil erreicht, dass das Ethernet-Kabel vom Dokumentenpuffer zum Prozessrechner deutlich länger sein kann als bei Verwendung eines USB-Kabels zu diesem Zweck. Im Vergleich zu der Verwendung von je einem Ethernet-Kabel pro Verarbeitungsaufnahme 107 zur Zuführung der Daten zu dem Dokumentenpuffer 100 lässt sich die Anzahl an Kabeln und das Gewicht und der Querschnitt innerhalb der Schleppkette des Dokumentenpuffers 100 reduzieren. Durch eine entsprechende Softwarekonfiguration kann der Zugriff auf die einzelnen Verarbeitungsaufnahme 107 zusätzlich zu dem Prozessrechner auch über alternative oder mehrere PCs erfolgen. Insgesamt ergibt sich somit eine gute Skalierbarkeit des Dokumentenpuffers 100.

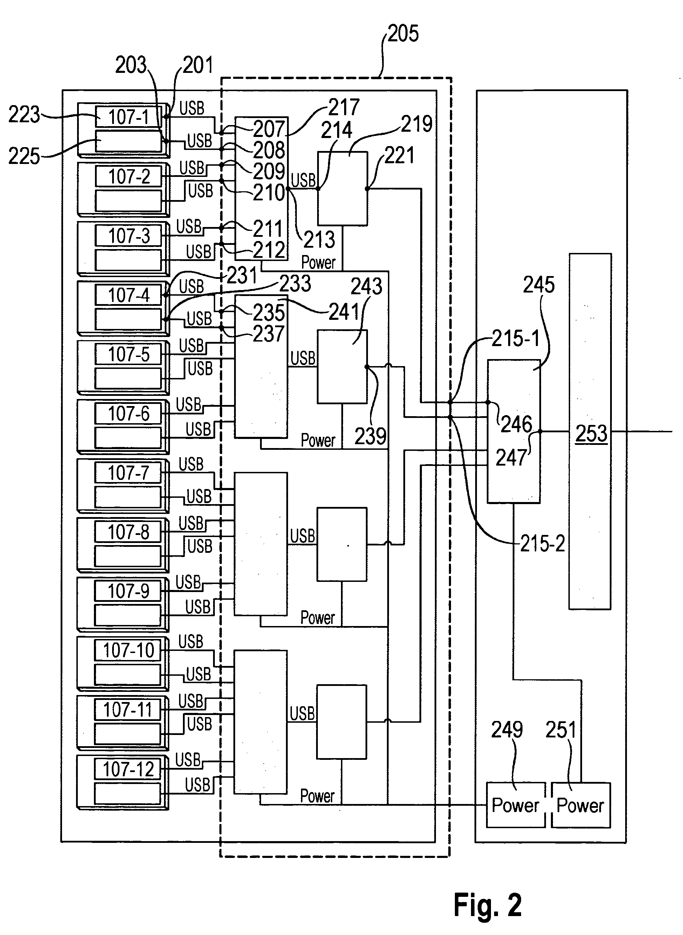

Fig. 2 zeigt eine erste Ausführungsform einer Netzwerktopologie im Inneren des Dokumentenpuffers 100. Jede der Verarbeitungsaufnahmen 107-1 bis 107-12 umfasst zwei Zugriffseinrichtungen 223 und 225. Bei diesen Zugriffseinrichtungen 223 und 225 kann es sich beispielsweise um Schreib-/Lesegräte für Smart-Cards handeln. Diese Zugriffseinrichtungen 223 und 225 umfassen jeweils eine USB-Schnittstelle 201 und 203 zur Übertragung von Daten zu oder von der Zugriffseinrichtung 223 und 225. Insgesamt umfasst der Dokumentenpuffer 100 zwölf Verarbeitungsaufnahmen 107-1 bis 107-12 mit jeweils zwei Zugriffseinrichtungen 223 und 225. Jeweils drei Verarbeitungsaufnahmen 107-1 bis 107-3, 107-4 bis 107-6, 107-7 bis 107-9 und 107-10 bis 107-11 bilden eine Gruppe, die mit einem USB-Hub 217 oder 241 des Netzwerkverteiler 205 verbunden ist.

Zum Ansteuern der Zugriffseinrichtungen 223 und 225 umfasst der Netzwerkverteiler 205 des Dokumentenpuffers 100 einerseits eine Anzahl an Verteilerschnittstellen 207, 208, 209, 210, 211 und 212, die mit den jeweiligen USB-Schnittstellen 201 und 203 der Zugriffseinrichtungen 223 und 225 verbunden sind und andererseits mehrere Ethernet-Netzwerkschnittstellen 215-1 und 215-2 zum Anschließen des Netzwerkverteilers 205 an ein Datennetzwerk über ein Gateway 253.

Der Netzwerkverteiler 205 des Dokumentenpuffers 100 wird unter anderem durch USB-Hubs 217 und 241 und USB-Lanports 219 und 243 gebildet.

Der USB-Hub 217 besitzt einen USB-Eingang 213 und sechs USB-Ausgänge oder Ports, die die Verteilerschnittstellen 207, 208, 209, 210, 211 und 212 bilden. Der USB-Hub 217 ist ein USB-Gerät, das das USB-Signal an dem USB-Eingang 213 an die Ports 207, 208, 209, 210, 211 und 212 verteilt oder umgekehrt die Signale von den Ports 207, 208, 209, 210, 211 und 212 an den USB-Eingang 213 leitet.

Der USB-Lanport 219 ist ein Kommunikationswandler, der ein an der Schnittstelle 221 zugeführtes Ethernet-Signal in ein USB-Signal an der Schnittstelle 214 umwandelt und ein an der Schnittstelle 214 zugeführtes USB-Signal in ein Ethernet-Signal an der Schnittstelle 221 umwandelt. Der USB-Anschluss 214 des Kommunikationswandlers 219 ist mit dem USB-Eingang 213 des USB-Hubs 217 verbunden.

Der Dokumentenpuffer 100 ist über vier Netzwerkschnittstellen 215 mit einem Ethernet-Switch 245 verbunden. Der Ethernet-Switch 245 besitzt einen Eingang 247 und mehrere Ausgänge. Der Ausgang 246 ist über die Netzwerkschnittstelle 215-1 des Dokumentenpuffers 100 mit der Eingangsanschluss 221 des USB-Lanports 219 verbunden. Die übrigen Ausgänge des Ethernet-Switch 245 sind über die anderen Netzwerkschnittstellen des Dokumentenpuffers 100 mit weiteren USB-Lanports verbunden. Über diese zusätzlichen USB-Lanports und USB-Hubs werden weitere Verteilerschnittstellen in entsprechender Weise bereitgestellt.

Beispielsweise sind die USB-Schnittstellen 231 und 233 mit den Verteilerschnittstellen 235 und 237 des USB-Hubs 241 verbunden. Der USB-Hub 241 ist mit dem USB-Lanport 243 verbunden, der über den Anschluss 239 und die Netzwerkschnittstelle 215-2 des Dokumentenpuffers 100 mit dem Ethernet-Switch 245 verbunden ist.

Zusätzlich sind die USB-Hubs, USB-Lanports und der Ethernet-Switch mit einer Stromversorgung 249 oder 251 verbunden, die den jeweiligen Einheiten die passende Spannung zuführt. In einer alternativen Ausführungsform kann die Stromversorgung der einzelnen Einheiten jedoch auch über die jeweiligen Netzwerkanschlüsse und -Kabel erfolgen.

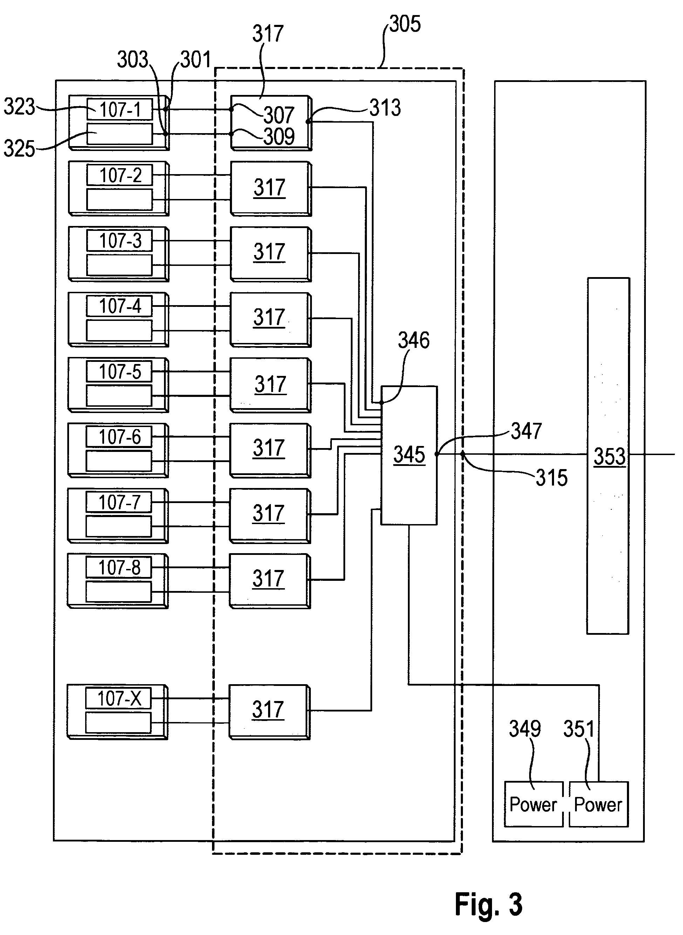

Fig. 3 zeigt eine zweite Ausführungsform einer Netzwerktopologie im Inneren des Dokumentenpuffers 100. Jede der Verarbeitungsaufnahmen 107-1 bis 107-X umfasst zwei Zugriffseinrichtungen 323 und 325. Jede dieser Zugriffseinrichtungen 323 und 325 weist jeweils eine USB-Schnittstelle 301 oder 303 zur Übertragung von Daten zu oder von der jeweiligen Zugriffseinrichtung 323 oder 325 auf. Insgesamt ist der Dokumentenpuffer 100 mit zehn Verarbeitungsaufnahmen 107-1 bis 107-X mit jeweils zwei Zugriffseinrichtungen 323 und 325 gezeigt. Im Allgemeinen kann die Zahl der Zugriffseinrichtungen variieren und den tatsächlichen Umständen angepasst werden..

Zum Ansteuern der einzelnen Zugriffseinrichtungen 323 und 325 umfasst der Netzwerkverteiler 305 mehrere Verteilerschnittstellen 307 und 309, die mit den jeweiligen USB-Schnittstellen 301 und 303 der Zugriffseinrichtungen 323 und 325 verbunden sind und andererseits eine Ethernet-Netzwerkschnittstelle 315 zum Anschließen des Netzwerkverteilers 305 an ein Datennetzwerk über ein Gateway 353.

Der Netzwerkverteiler 305 wird unter anderem durch mehrere USB-Lanports 317 und einen Ethernet-Switch 345 gebildet.

Der USB-Lanport 317 besitzt einen Ethernet-Eingang 313 und zwei USB-Ausgänge oder Ports, die die Verteilerschnittstellen 307 und 309 bilden. Der USB-Lanport 317 ist ein USB-Ethernet-Kommunikationswandler, der das Ethernet-Signal an dem Ethernet-Eingang 313 an die Ports 307 und 309 verteilt oder umgekehrt die USB-Signale von den Ports 307 und 309 an den Ethernet-Eingang 313 leitet. Dabei wird eine Umwandlung zwischen den jeweiligen Protokollen und Signalen durchgeführt. Jeder Verarbeitungsaufnahme 107-1 bis 107-X ist ein entsprechender USB-Lanport 317 zugeordnet.

Der Ethernet-Anschluss 313 des USB-Lanports 317 ist mit dem Ethernet-Switch 345 verbunden. Der Ethernet-Switch 345 besitzt einen Eingang 347 und mehrere Ausgänge. Der Ausgang 346 ist mit der Schnittstelle 313 des USB-Lanports 317 verbunden. Die übrigen Ausgänge des Ethernet-Switch 345 sind mit weiteren USB-Lanports verbunden. Über diese zusätzlichen USB-Lanports werden weitere Verteilerschnittstellen bereitgestellt, die über eine Verteilerstruktur angeschlossen sind, die vom Aufbau identisch zu der oben beschriebenen ist. Die Netzwerktopologie des Dokumentenpuffers 100 ist derart ausgelegt, dass eine Vielzahl von Verteilerschnittstellen gebildet werden kann. Der Eingang 347 dient als Ethernet-Netzwerkschnittstelle 315 zum Anschließen des Dokumentenpuffers 100 an ein Datennetzwerk und zum Verbinden eines nicht gezeigten, zentralen Personalisierungs- und Verifikations-PCs und einer Mehrzahl von weiteren PCs. Die Energieversorgung der einzelnen Einheiten wird durch die Stromversorgung 349 und 351 gewährleistet, die die jeweiligen Einheiten mit einer passenden Spannung versorgt.

Im Allgemeinen ist die vorliegende Erfindung nicht auf die in der Beschreibung und den Figuren angegebenen, spezifischen Merkmale beschränkt, sondern es können auch andere als die beschriebenen Komponenten zum Einsatz kommen.

Ein Identitätsdokument ist jedes Dokument, dessen Echtheit und Authentizität anhand bestimmter Kriterien festgestellt werden soll. Beispielsweise ist ein Identitätsdokument ein Reisepass, ein Personalausweis, eine Banknote, ein Führerschein oder ähnliches.

Eine Verarbeitungsaufnahme ist jede Einrichtung, in die ein Dokument zum Zwecke einer elektronischen Bearbeitung eingelegt oder aufgenommen werden kann.

Eine Zugriffseinrichtung dient zum Herstellen eines Zugangs zu dem Identitätsdokument zum Zwecke eines Datenaustausches oder einer Datenübermittlung mit einem Datenspeicher oder einer Datenstruktur. Der Zugriff kann beispielsweise im Rahmen einer Schreiboperation oder einer Leseoperation (Schreib-Lese-Zugriff) erfolgen und zum Durchführen einer Personalisierung, einer Identifikation, einer Authentifizierung oder einer Verifikation dienen. Insbesondere können im Rahmen des Zugriffs kryptographische Operationen wie eine Verschlüsselung von Daten oder eine elektronische Signatur durchgeführt werden.

Der Zugriff kann über bestimmte Zugriffstechnologien erfolgen, beispielsweise elektrisch oder optisch. Im Falle eines elektrischen Zugriffs kann die Zugriffseinrichtung Kontaktstellen aufweisen, die mit entsprechenden Kontaktstellen auf dem Dokument eine leitende Verbindung eingehen. In einer anderen Ausführungsform kann ein elektrischer Zugriff drahtlos über von Antennen ausgestrahlte elektromagnetische Felder erfolgen. Ein optischer Zugriff kann beispielsweise über ein Einschreiben von Daten mit einem Laser oder ein Auslesen von Daten mittels einer CCD-Einheit erfolgen.

Eine Schnittstelle oder Kommunikationsschnittstelle dient zur Datenkommunikation zwischen unterschiedlichen Einheiten. Die Schnittstelle wird durch eine Menge von Regeln beschrieben, nach denen eine Kommunikation zu erfolgen hat. Neben der Beschreibung, welche Funktionen vorhanden sind und wie sie benutzt werden, gehört zu der Schnittstellenbeschreibung ein Kontrakt, der die Semantik der einzelnen Funktionen beschreibt.

Eine Verteilerschnittstelle ist eine Schnittstelle, die zur Datenanbindung oder Datenkommunikation mit einer Zugriffseinheit oder einer Verarbeitungseinheit dient. Eine Netzwerkschnittstelle ist eine Schnittstelle, die zur Datenanbindung oder Datenkommunikation an ein Datennetzwerk dient.

Eine Übertragungstechnologie bezeichnet die kommunikationstechnischen Verfahren, die innerhalb der physikalischen Schicht zur Datenübertragung benutzt werden. Bekannte Übertragungstechnologien zur Datenübertragung sind beispielsweise Universal Serial Bus (USB), Serial Advanced Technology Attachment Protokoll (SATA), RS232, RS485, I²C, Profibus, AS-Interface, Interbus, FlexRay, LIN-Bus, FAIS, IrDa, MODBUS, CAN, Feldbus, Thunderbolt, Ethernet oder Wireless Local Area Network (WLAN).

Ein Netzwerkverteiler ist ein Gerät, das über ein Netzwerk empfangene Daten einer Anzahl von weiteren Geräten zuleitet oder umgekehrt die von den Geräten empfangenen Daten in das Netzwerk leitet. Daneben kann der Netzwerkverteiler auch eine Kommunikation zwischen den Geräten ermöglichen.
Ein Kommunikationswandler ist ein Gerät zur Umwandlung einer Datenkommunikation gemäß einer Übertragungstechnologie in eine Datenkommunikation gemäß einer andren Übertragungstechnologie. Bei dieser Umwandlung kann eine beliebige Übertragungstechnologie in eine andere Übertragungstechnologie und umgekehrt umgesetzt werden, beispielsweise USB in Ethernet, WLAN in USB, ProfiBus in USB, usw. Ein Kommunikationswandler kann ebenfalls ein RS232-Ethernet-Wandler, ein RS232-Ethernet-Adapter oder RS232-Ethernet-Port sein.

### BEZUGSZEICHENLISTE

- 100: Dokumentenpuffer
- 103: Identitätsdokument
- 105: Schlitz oder Schacht
- 107-X: Verarbeitungsaufnahmen
- 109: Datenkabel / Ethernet-Kabel
- 111: Produktionsstraße
- 201, 203: Kommunikationsschnittstelle
- 205: Netzwerkverteiler
- 207-212: Verteilerschnittstellen
- 213: USB-Eingang
- 214: Schnittstelle / USB-Anschluss
- 215-1, 215-2: Ethernet-Netzwerkschnittstelle
- 217: Netzwerkhub
- 219: Kommunikationswandler / USB-Lanport
- 221: Netzwerkschnittstelle
- 223, 225: Zugriffseinrichtung
- 231, 233: Kommunikationsschnittstelle
- 235, 237: Verteilerschnittstellen
- 239: Netzwerkschnittstelle / Anschluss
- 241: Netzwerkhub
- 243: Kommunikationswandler / USB-Lanport
- 245: Netzwerkschalter / Ethernet-Switch
- 246: Ausgang
- 247: Eingangs/Ausgangsschnittstelle
- 249, 251: Stromversorgung
- 253: Gateway
- 301, 303: USB-Schnittstelle
- 305: Netzwerkverteiler
- 307: Verteilerschnittstelle
- 309: Verteilerschnittstelle
- 313: USB-Eingang
- 315: Ethernet-Netzwerkschnittstelle
- 317: USB-Lanport
- 323: Zugriffseinrichtung
- 325: Zugriffseinrichtung
- 345: Netzwerkschalter / Ethernet-Switch
- 346: Ausgang
- 347: Eingangsschnittstelle
- 349: Leistungsversorgung
- 351: Leistungsversorgung
- 353: Gateway

## Patentansprüche

1. Dokumentenpuffer (100) für zumindest ein Identitätsdokument (103), mit einer Anzahl von Verarbeitungsaufnahmen (107) zur Aufnahme von jeweils einem Identitätsdokument (103), wobei jede Verarbeitungsaufnahme (107) eine Zugriffseinrichtung (223) zum Zugreifen auf das Identitätsdokument (103) und eine der jeweiligen Zugriffseinrichtung (223) zugeordnete Kommunikationsschnittstelle (201) für die Kommunikation gemäß einer ersten Übertragungstechnologie aufweist,
**dadurch gekennzeichnet dass** der Dokumentenpuffer (100) ferner aufweist:
einen Netzwerkverteiler (205) mit einer Anzahl von Verteilerschnittstellen (207, 208, 209, 210, 211, 212) für die Kommunikation gemäß der ersten Übertragungstechnologie und mit einer Netzwerkschnittstelle (215-1) für die Kommunikation gemäß einer zweiten Übertragungstechnologie, wobei jeweils eine Kommunikationsschnittstelle (201) einer Verteilerschnittstelle (207) zugeordnet ist, und wobei der Netzwerkverteiler (205) ausgebildet ist,
- ein an eine Verteilerschnittstelle (207) anlegbares erstes Kommunikationssignal gemäß der ersten Übertragungstechnologie in ein zweites Kommunikationssignal gemäß der zweiten Übertragungstechnologie umzuwandeln und das zweite Kommunikationssignal an der Netzwerkschnittstelle (215-1) auszugeben, oder
- ein an die Netzwerkschnittstelle (215-1) anlegbares zweites Kommunikationssignal gemäß der zweiten Übertragungstechnologie in ein erstes Kommunikationssignal gemäß der ersten Übertragungstechnologie umzuwandeln und das erste Kommunikationssignal an einer Verteilerschnittstelle (207) auszugeben.

2. Dokumentenpuffer (100) nach Anspruch 1, wobei die erste Übertragungstechnologie eine der folgenden Übertragungstechnologien ist:
Universal Serial Bus, USB, wobei die Kommunikationsschnittstellen und die Verteilerschnittstellen drahtgebundene oder drahtlose USB-Schnittstellen sind; Serial Advanced Technology Attachment Protokoll, SATA, wobei die Kommunikationsschnittstellen und die Verteilerschnittstellen drahtgebundene oder drahtlose SATA-Schnittstellen sind;
RS232, wobei die Kommunikationsschnittstellen und die Verteilerschnittstellen drahtgebundene oder drahtlose RS232-Schnittstellen sind;
RS485, wobei die Kommunikationsschnittstellen und die Verteilerschnittstellen drahtgebundene oder drahtlose RS485-Schnittstellen sind;
I²C, wobei die Kommunikationsschnittstellen und die Verteilerschnittstellen drahtgebundene oder drahtlose I²C -Schnittstellen sind;
Profibus, wobei die Kommunikationsschnittstellen und die Verteilerschnittstellen drahtgebundene oder drahtlose Profibus-Schnittstellen sind;
AS-Interface, wobei die Kommunikationsschnittstellen und die Verteilerschnittstellen drahtgebundene oder drahtlose AS-Schnittstellen sind;
Interbus, wobei die Kommunikationsschnittstellen und die Verteilerschnittstellen drahtgebundene oder drahtlose Interbus-Schnittstellen sind;
FlexRay, wobei die Kommunikationsschnittstellen und die Verteilerschnittstellen drahtgebundene oder drahtlose FlexRay-Schnittstellen sind;
LIN-Bus, wobei die Kommunikationsschnittstellen und die Verteilerschnittstellen drahtgebundene oder drahtlose LIN-Bus-Schnittstellen sind;
FAIS, wobei die Kommunikationsschnittstellen und die Verteilerschnittstellen drahtgebundene oder drahtlose FAIS-Schnittstellen sind;
IrDa, wobei die Kommunikationsschnittstellen und die Verteilerschnittstellen drahtgebundene oder drahtlose IrDa-Schnittstellen sind;
MODBUS, wobei die Kommunikationsschnittstellen und die Verteilerschnittstellen drahtgebundene oder drahtlose MODBUS-Schnittstellen sind;
CAN, wobei die Kommunikationsschnittstellen und die Verteilerschnittstellen drahtgebundene oder drahtlose CAN-Schnittstellen sind;
Feldbus, wobei die Kommunikationsschnittstellen und die Verteilerschnittstellen drahtgebundene oder drahtlose Feldbus-Schnittstellen sind; oder
Thunderbolt, wobei die Kommunikationsschnittstellen und die Verteilerschnittstellen drahtgebundene oder drahtlose Thunderbolt-Schnittstellen sind.

3. Dokumentenpuffer (100) nach Anspruch 1 oder 2, wobei die zweite Übertragungstechnologie eine der folgenden Übertragungstechnologien ist:
Ethernet, wobei die Netzwerkschnittstelle eine Ethernet-Schnittstelle ist;
Wireless Local Area Network, WLAN, wobei die Netzwerkschnittstelle eine WLAN-Schnittstelle ist;
PowerLAN, dLAN, wobei die Netzwerkschnittstelle eine dLAN-Schnittstelle ist; oder
Lichtwellenleiterübertragungstechnologie, wobei die Netzwerkschnittstelle eine Lichtwellenleiter-Schnittstelle ist.

4. Dokumentenpuffer (100) nach einem der vorstehenden Ansprüche, wobei der Netzwerkverteiler (205) einen Netzwerkhub (217), insbesondere einen USB-Netzwerkhub, mit der Mehrzahl der Verteilerschnittstellen (207, 208, 209, 210, 211, 212) und einen Kommunikationswandler (219) mit einer Netzwerkschnittstelle (221) aufweist, wobei der Kommunikationswandler (219) ausgebildet ist, das erste Kommunikationssignal in das zweite Kommunikationssignal oder das zweite Kommunikationssignal in das erste Kommunikationssignal umzuwandeln.

5. Dokumentenpuffer (100) nach Anspruch 4, wobei der Kommunikationswandler (219) ein USB-Ethernet-Wandler, insbesondere ein USB-Ethernet-Adapter, USB-Ethernet-Port, oder ein RS232-Ethernet-Wandler, insbesondere ein RS232-Ethernet-Adapter oder RS232-Ethernet-Port ist.

6. Dokumentenpuffer (100) nach einem der vorstehenden Ansprüche, wobei die Identitätsdokumente (103) mit Datenträgern versehen sind, und wobei jede Zugriffseinrichtung (223, 225) über eine Kommunikationsschnittstelle (201, 203) zum Zugreifen auf die jeweiligen Datenträger ansteuerbar ist.

7. Dokumentenpuffer (100) nach einem der vorstehenden Ansprüche, wobei jede Verarbeitungsaufnahme (107) eine Mehrzahl von Zugriffseinrichtungen (223, 225) für die Kommunikation mit einem Datenträger oder einer Mehrzahl von Datenträgern eines Identitätsdokumentes (103) für unterschiedliche Zugriffstechnologien, insbesondere für kontaktlose und kontaktbehaftete Zugriffstechnologien, aufweist, wobei jede Verarbeitungsaufnahme (107) eine Mehrzahl von Kommunikationsschnittstellen (201, 203) aufweist, wobei jeder Zugriffseinrichtung (223, 225) eine Kommunikationsschnittstelle (201, 203) zugeordnet ist, und wobei jeder Kommunikationsschnittstelle (201, 203) eine Verteilerschnittstelle (207, 208) zugeordnet ist.

8. Dokumentenpuffer (100) nach einem der vorstehenden Ansprüche, wobei die Mehrzahl der Verarbeitungsaufnahmen (107) eine erste Verarbeitungsgruppe (107-1, 107-2, 107-3) formt, wobei der Dokumentenpuffer (100) eine weitere Mehrzahl von Verarbeitungsaufnahmen (107) mit jeweils einer weiteren Kommunikationsschnittstelle (231) für die Kommunikation gemäß der ersten Übertragungstechnologie aufweist, wobei die weitere Mehrzahl der Verarbeitungsaufnahmen (107) eine zweite Verarbeitungsgruppe (107-4, 107-5, 107-6) formt; wobei
der Netzwerkverteiler (205) eine weitere Mehrzahl von Verteilerschnittstellen (235, 237) und eine weitere Netzwerkschnittstelle (215-2) aufweist, wobei jeweils einer weiteren Kommunikationsschnittstelle (231, 233) jeweils eine weitere Verteilerschnittstelle (235, 237) zugeordnet ist, und wobei der Netzwerkverteiler (205) ausgebildet ist,
- ein an eine weitere Verteilerschnittstelle (235, 237) anlegbares erstes Kommunikationssignal gemäß der ersten Übertragungstechnologie in ein zweites Kommunikationssignal gemäß der zweiten Übertragungstechnologie umzuwandeln und das zweite Kommunikationssignal an der weiteren Netzwerkschnittstelle (215-2) bereitzustellen, oder
- ein an die weitere Netzwerkschnittstelle (215-2) anlegbares zweites Kommunikationssignal gemäß der zweiten Übertragungstechnologie in ein erstes Kommunikationssignal gemäß der ersten Übertragungstechnologie umzuwandeln und das erste Kommunikationssignal an einer weiteren Verteilerschnittstelle (235, 237) auszugeben.

9. Dokumentenpuffer (100) nach Anspruch 8, wobei der Netzwerkverteiler (205) einen weiteren Netzwerkhub (241), insbesondere einen USB-Netzwerkhub, mit der weiteren Mehrzahl der Verteilerschnittstellen (235, 237) und einen weiteren Kommunikationswandler (243) mit der weiteren Netzwerkschnittstelle (215-2) umfasst, wobei der Kommunikationswandler (243) ausgebildet ist, das erste Kommunikationssignal in das zweite Kommunikationssignal oder das zweite Kommunikationssignal in das erste Kommunikationssignal umzuwandeln.

10. Dokumentenpuffer (100) nach Anspruch 8 oder 9, die ferner einen Netzwerkschalter (245), insbesondere einen Ethernet-Switch, mit zumindest einer Eingangs/Ausgangsschnittstelle (247) aufweist, welche mit der Netzwerkschnittstelle verbunden ist.

11. Dokumentenpuffer (100) nach einem der vorstehenden Ansprüche, die ferner eine Datenverarbeitungseinrichtung aufweist, welche mit der Netzwerkschnittstelle (215) verbindbar und ausgebildet ist, selektiv die Zugriffseinrichtungen (223, 225) über die Kommunikationsschnittstellen (201, 203) zum Zugriff auf die Identitätsdokumente (103), insbesondere zum Zugriff auf Datenträger der Identitätsdokumente, anzusteuern.

12. Dokumentenpuffer (100) nach einem der vorstehenden Ansprüche, wobei die Zugriffseinrichtungen (223, 225) elektronische Schreib-Lesegeräte oder optische Lesegeräte, insbesondere optische Lesegeräte zur Bildaufnahme oder eine Sensorik im sichtbaren Lichtbereich, im UV-Lichtbereich oder im Infrarot-Lichtbereich, oder eine mechanische oder induktive Sensorik im Bereich physikalischer Messtechnik sind.

13. Verwendung des Dokumentenpuffers (100) nach einem der vorstehenden Ansprüche zur Personalisierung oder zur Überprüfung von Personalisierung von Identitätsdokumenten (103) oder zur Analyse von Daten von Identitätsdokumenten (103) oder zur Überprüfung der Echtheit von Identitätsdokumenten (103).

14. Verfahren zum Zugreifen auf elektronisch auslesbare Identitätsdokumente (103), welche in einer Mehrzahl von Verarbeitungsaufnahmen (107) angeordnet sind, wobei jede Verarbeitungsaufnahme (107) eine Zugriffseinrichtung (223) zum Zugriff auf das Identitätsdokument (103) und eine der jeweiligen Zugriffseinrichtung (223) zugeordnete Kommunikationsschnittstelle (201) für die Kommunikation gemäß einer ersten Übertragungstechnologie aufweist, wobei jeweils eine Kommunikationsschnittstelle (201) einer Verteilerschnittstelle (207) eines Netzwerkverteilers (205) mit einer Anzahl von Verteilerschnittstellen (207, 208, 209, 210, 211, 212) für die Kommunikation gemäß der ersten Übertragungstechnologie und mit einer Netzwerkschnittstelle (215) für die Kommunikation gemäß einer zweiten Übertragungstechnologie zugeordnet ist,
- ein an einer Verteilerschnittstelle (207) anlegbares erstes Kommunikationssignal gemäß der ersten Übertragungstechnologie durch den Netzwerkverteiler in ein zweites Kommunikationssignal gemäß der zweiten Übertragungstechnologie umgewandelt und das zweite Kommunikationssignal an der Netzwerkschnittstelle (215) bereitgestellt wird, oder
- ein an die Netzwerkschnittstelle (215) anlegbares zweites Kommunikationssignal gemäß der zweiten Übertragungstechnologie durch den Netzwerkverteiler in ein erstes Kommunikationssignal gemäß der ersten Übertragungstechnologie umgewandelt und das erste Kommunikationssignal an einer Verteilerschnittstelle (207) ausgegeben wird.

## Claims

1. A document buffer (100) for at least one identification document (103) comprising:
a number of processing recorders (107) for respectively recording one identification document (103) each, wherein each processing recorder (107) has an access device (223) for accessing the identification document (103) and a communication interface (201) associated with the respective access device for communication pursuant to a first transmission technology;
**characterized in that** the document buffer (100) further comprises:
a network distributor (205) having a number of distributor interfaces (207, 208, 209, 210, 211,212) for communication pursuant to the first transmission technology and a network interface (215-1) for communication pursuant to a second transmission technology, wherein one communication interface (201) is in each case associated with a distributor interface (207), and wherein the network distributor (205) is designed to:
- convert a first communication signal pursuant to the first transmission technology feedable to a distributor interface (207) into a second communication signal pursuant to the second transmission technology and output the second communication signal to the network interface (215-1), or
- convert a second communication signal pursuant to the second transmission technology feedable to the network interface (215-1) into a first communication signal pursuant to the first transmission technology and output the first communication signal to a distributor interface (207).

2. The document buffer (100) according to claim 1, wherein the first transmission technology is one of the following transmission technologies:
Universal Serial Bus (USB), wherein the communication interfaces and the distributor interfaces are wired or wireless USB interfaces;
Serial Advanced Technology Attachment Protocol (SATA), wherein the communication interfaces and the distributor interfaces are wired or wireless SATA interfaces;
RS232, wherein the communication interfaces and the distributor interfaces are wired or wireless RS232 interfaces;
RS485, wherein the communication interfaces and the distributor interfaces are wired or wireless RS485 interfaces;
I²C, wherein the communication interfaces and the distributor interfaces are wired or wireless I²C interfaces;
Profibus, wherein the communication interfaces and the distributor interfaces are wired or wireless Profibus interfaces;
AS interface, wherein the communication interfaces and the distributor interfaces are wired or wireless AS interfaces;
Interbus, wherein the communication interfaces and the distributor interfaces are wired or wireless Interbus interfaces;
FlexRay, wherein the communication interfaces and the distributor interfaces are wired or wireless FlexRay interfaces;
LIN bus, wherein the communication interfaces and the distributor interfaces are wired or wireless LIN bus interfaces;
FAIS, wherein the communication interfaces and the distributor interfaces are wired or wireless FAIS interfaces;
IrDa, wherein the communication interfaces and the distributor interfaces are wired or wireless IrDa interfaces;
Modbus, wherein the communication interfaces and the distributor interfaces are wired or wireless Modbus interfaces;
CAN, wherein the communication interfaces and the distributor interfaces are wired or wireless CAN interfaces;
Field bus, wherein the communication interfaces and the distributor interfaces are wired or wireless field bus interfaces; or
Thunderbolt, wherein the communication interfaces and the distributor interfaces are wired or wireless Thunderbolt interfaces.

3. The document buffer (100) according to claim 1 or 2, wherein the second transmission technology is one of the following transmission technologies:
Ethernet, wherein the network interface is an Ethernet interface;
Wireless Local Area Network (WLAN), wherein the network interface is a WLAN interface;
PowerLAN (DLAN), wherein the network interface is a DLAN interface; or
Optical transmission technology, wherein the network interface is an optical fiber interface.

4. The document buffer (100) according to any one of the preceding claims, wherein the network distributor (205) comprises a network hub (217), particularly a USB network hub, having the majority of the distributor interfaces (207, 208, 209, 210, 211, 212) and a communication converter (219) having a network interface (221), wherein the communication converter (219) is designed to convert the first communication signal into the second communication signal or the second communication signal into the first communication signal.

5. The document buffer (100) according to claim 4, wherein the communication converter (219) is a USB Ethernet converter, particularly a USB Ethernet adapter, a USB Ethernet port or an RS232 Ethernet converter, particularly an RS232 Ethernet adapter or RS232 Ethernet port.

6. The document buffer (100) according to any one of the preceding claims, wherein the identification documents (103) are provided with data carriers and wherein each access device (223, 225) can be controlled via a communication interface (201, 203) for accessing the respective data carrier.

7. The document buffer (100) according to any one of the preceding claims, wherein each processing recorder (107) has a plurality of access devices (223, 225) for communicating with a data carrier or a plurality of data carriers of an identification document (103) for different access technologies, particularly contactless and contact access technologies, wherein each processing recorder (107) comprises a plurality of communication interfaces (201, 203), wherein each access device (223, 225) is associated with a respective communication interface (201, 203), and wherein each communication interface (201, 203) is associated with a distributor interface (207, 208).

8. The document buffer (100) according to any one of the preceding claims, wherein the plurality of processing recorders (107) form a first processing group (107-1, 107-2, 107-3), wherein the document buffer (100) has a further plurality of processing recorders (107), each having a further communication interface (231) for the communication pursuant to the first transmission technology, wherein the further plurality of processing recorders (107) form a second processing group (107-4, 107-5, 107-6); wherein
the network distributor (205) has a further plurality of distributor interfaces (235, 237) and a further network interface (215-2), wherein a further communication interface (231, 233) is in each case associated with a further distributor interface (235, 237), and wherein the network distributor (205) is designed to:
- convert a first communication signal pursuant to the first transmission technology feedable to a further distributor interface (235, 237) into a second communication signal pursuant to the second transmission technology and supply the second communication signal to the further network interface (215-2), or
- convert a second communication signal pursuant to the second transmission technology feedable to the further network interface (215-2) into a first communication signal pursuant to the first transmission technology and output the first communication signal to a further distributor interface (235, 237).

9. The document buffer (100) according to claim 8, wherein the network distributor (205) comprises a further network hub (241), particularly a USB network hub, having the further plurality of distributor interfaces (235, 237) and a further communication converter (243) having the further network interface (215-2), wherein the communication converter (243) is designed to convert the first communication signal into the second communication signal or the second communication signal into the first communication signal.

10. The document buffer (100) according to claim 8 or 9, further comprising a network switch (245), particularly an Ethernet switch, having at least one input/output interface (247) connected to the network interface.

11. The document buffer (100) according to any one of the preceding claims, further comprising a data processing device able to be connected to the network interface (215) and designed to selectively control the access devices (223, 225) for accessing the identification documents (103), particularly for accessing the data carriers of the identification documents, via the communication interfaces (201, 203).

12. The document buffer (100) according to any one of the preceding claims, wherein the access devices (223, 225) are electronic read/write devices or optical readers, particularly image acquisition optical readers, or a sensor system for the visible light spectrum, the UV light spectrum or the infrared light spectrum, or a mechanical or inductive sensor system for physical measurement technology.

13. The use of the document buffer (100) according to any one of the preceding claims for personalizing or verifying the personalization of identification documents (103), for analyzing the data of identification documents (103) or for verifying the authenticity of identification documents (103).

14. A method for accessing electronically readable identification documents (103) which are arranged in a plurality of processing recorders (107), wherein each processing recorder (107) comprises an access device (223) for accessing the identification document (103) and a communication interface (201) associated with the respective access device (223) for the communication pursuant to a first transmission technology, wherein one communication interface (201) is in each case associated with a distributor interface (207) of a network distributor (205) having a plurality of distributor interfaces (207, 208, 209, 210, 211, 212) for communication pursuant to the first transmission technology and a network interface (215) for communication pursuant to the second transmission technology,
- the network distributor converting a first communication signal pursuant to the first transmission technology feedable to a distributor interface (207) into a second communication signal pursuant to the second transmission technology and said second communication signal being supplied to the network interface (215), or
- the network distributor converting a second communication signal pursuant to the second transmission technology feedable to the network interface (215) into a first communication signal pursuant to the first transmission technology and said first communication signal being output to a distributor interface (207).

## Revendications

1. Tampon de documents (100) pour au moins un document d'identité (103), comportant un certain nombre de capteurs de traitement (107) pour acquérir respectivement un document d'identité (103), chaque capteur de traitement (107) comportant un dispositif d'accès (223) pour avoir accès au document d'identité (103) et une interface de communication (201) associée au dispositif d'accès (223) respectif pour la communication selon une première technologie de transmission,
**caractérisé en ce que** le tampon de document (100) en outre comporte:
un concentrateur (205) ayant un certain nombre d'interfaces répartiteur (207, 208, 209, 210, 211,212) pour la communication selon la première technologie de transmission et une interface réseau (215-1) pour la communication selon une deuxième technologie de transmission, une interface de communication (201) étant associée respectivement à une interface répartiteur (207) et le concentrateur (205) étant réalisé:
- pour transformer un premier signal de communication, qui peut être appliqué à une interface répartiteur (207), selon la première technologie de transmission en un deuxième signal de communication selon la deuxième technologie de transmission et pour délivrer le deuxième signal de communication à l'interface réseau (215-1), ou
- pour transformer un deuxième signal de communication, qui peut être appliqué à l'interface réseau (215-1), selon la deuxième technologie de transmission en un premier signal de communication selon la première technologie de transmission et pour délivrer le premier signal de communication à une interface répartiteur (207).

2. Tampon de documents (100) selon la revendication 1, la première technologie de transmission étant l'une des technologies de transmission suivantes:
Universal Serial Bus, USB, les interfaces de communication et les interfaces répartiteur étant des interfaces USB avec une connexion filaire ou sans fil;
Serial Advanced Technology Attachment Protokoll, SATA, les interfaces de communication et les interfaces répartiteur étant des interfaces SATA avec une connexion filaire ou sans-fil;
RS232, les interfaces de communication et les interfaces répartiteur étant des interfaces RS232 avec une connexion filaire ou sans fil;
RS485, les interfaces de communication et les interfaces répartiteur étant des interfaces RS485 avec une connexion filaire ou sans fil;
I²C, les interfaces de communication et les interfaces répartiteur étant des interfaces I²C avec une connexion filaire ou sans fil;
Profibus, les interfaces de communication et les interfaces répartiteur étant des interfaces Profibus avec une connexion filaire ou sans fil;
AS-Interface, les interfaces de communication et les interfaces répartiteur étant des interfaces AS avec une connexion filaire ou sans fil;
Interbus, les interfaces de communication et les interfaces répartiteur étant des interfaces Interbus avec une connexion filaire ou sans fil;
FlexRay, les interfaces de communication et les interfaces répartiteur étant des interfaces FlexRay avec une connexion filaire ou sans fil;
LIN-bus, les interfaces de communication et les interfaces répartiteur étant des interfaces LIN-bus avec une connexion filaire ou sans fil;
FAIS, les interfaces de communication et les interfaces répartiteur étant des interfaces FAIS avec une connexion filaire ou sans fil;
IrDa, les interfaces de communication et les interfaces répartiteur étant des interfaces IrDa avec une connexion filaire ou sans fil;
MODBUS, les interfaces de communication et les interfaces répartiteur étant des interfaces MODBUS avec une connexion filaire ou sans fil;
CAN, les interfaces de communication et les interfaces répartiteur étant des interfaces CAN avec une connexion filaire ou sans fil;
bus de terrain, les interfaces de communication et les interfaces répartiteur étant des interfaces de bus de terrain avec une connexion filaire ou sans fil;
Thunderbolt, les interfaces de communication et les interfaces répartiteur étant des interfaces Thunderbolt avec une connexion filaire ou sans fil;

3. Tampon de documents (100) selon la revendication 1 ou 2, la deuxième technologie de transmission étant l'une des technologies de transmission suivantes:
Ethernet, l'interface réseau étant une interface Ethernet;
Wireless Local Area Network, WLAN, l'interface réseau étant une interface WLAN;
PowerLAN, dLAN, l'interface réseau étant une interface dLAN; ou
une technologie de transmission à fibre optique, l'interface réseau étant une interface de fibre optique.

4. Tampon de documents (100) selon l'une des revendications précédentes, le concentrateur (205) comportant un hub réseau (217), en particulier un hub réseau USB, contenant la pluralité d'interfaces répartiteur (207, 208, 209, 210, 211, 212) et un convertisseur de communication (219) contenant une interface réseau (221), le convertisseur de communication (219) étant réalisé pour transformer le premier signal de communication en le deuxième signal de communication ou pour transformer le deuxième signal de communication en le premier signal de communication.

5. Tampon de documents (100) selon la revendication 4, le convertisseur de communication (219) étant un USB Ethernet convertisseur, en particulier un adaptateur USB Ethernet, un port USB Ethernet, ou un convertisseur RS232 Ethernet, en particulier un adaptateur RS232 Ethernet ou un port RS232 Ethernet.

6. Tampon de documents (100) selon l'une des revendications précédentes, les documents d'identité (103) étant munis de supports de données et chaque dispositif d'accès (223, 225) pouvant être contrôlé à travers une interface de communication (201, 203) pour avoir accès aux supports de données respectifs.

7. Tampon de documents (100) selon l'une des revendications précédentes, chaque capteur de traitement (107) comportant une pluralité de dispositifs d'accès (223, 225) pour la communication avec un support de données ou avec une pluralité de supports de données d'un document d'identité (103) pour des technologies d'accès différentes, en particulier pour des technologies d'accès avec ou sans contact, et chaque capteur de traitement (107) comportant une pluralité d'interfaces de communication (201, 203), une interface de communication (201, 203) étant associée à chaque dispositif d'accès (223, 225) et une interface répartiteur (207, 208) étant associée à une interface de communication (201, 203).

8. Tampon de documents (100) selon l'une des revendications précédentes, la pluralité de capteurs de traitement (107) formant un premier groupe de traitement (107-1, 107-2, 107-3), le tampon de documents (100) comportant une autre pluralité de capteurs de traitement (107) ayant respectivement une autre interface de communication (231) pour la communication selon la première technologie de transmission, l'autre pluralité de capteurs de traitement (107) formant un autre groupe de traitement (107-4, 107-5, 107-6);
le concentrateur (205) comportant une autre pluralité d'interfaces répartiteur (235, 237) et une autre interface réseau (215-2), une autre interface répartiteur (235, 237) étant associée respectivement à une autre interface de communication (231, 233), et le concentrateur (205) étant réalisé:
pour transformer un premier signal de communication, qui peut être appliqué à une autre interface répartiteur (235, 237), selon la première technologie de transmission en un deuxième signal de communication selon la deuxième technologie de transmission et pour rendre disponible le deuxième signal de communication à l'autre interface réseau (215-2), ou
pour transformer un deuxième signal, qui peut être appliqué à l'autre interface réseau (215-2), selon la deuxième technologie de transmission en un premier signal de communication selon la première technologie de transmission et pour délivrer le premier signal de communication à une autre interface répartiteur (235, 237).

9. Tampon de documents (100) selon la revendication 8, le concentrateur (205) comportant un autre hub réseau (241), en particulier un hub réseau USB, avec l'autre pluralité d'interfaces répartiteur (235, 237) et un autre convertisseur de communication (243) avec l'autre interface réseau (215-2), le convertisseur de communication (243) étant réalisé pour transformer le premier signal de communication en le deuxième signal de communication ou le deuxième signal de communication en le premier signal de communication.

10. Tampon de documents (100) selon la revendication 8 ou 9, en outre comportant un commutateur de réseau (245), en particulier un switch Ethernet, ayant au moins une interface d'entrée ou de sortie (247), qui est connectée avec l'interface réseau.

11. Tampon de documents (100) selon l'une des revendications précédentes, qui en outre comporte un dispositif de traitement de données, qui peut être connecté avec l'interface réseau (215) et qui est réalisé pour commander sélectivement les dispositifs d'accès (223, 225) à travers les interfaces de communications (201, 203) pour avoir accès aux documents d'identité (103), en particulier pour avoir accès aux supports de données des documents d'identité.

12. Tampon de documents (100) selon l'une des revendications précédentes, les dispositifs d'accès (223, 225) étant des dispositifs d'écriture et de lecture électroniques ou des dispositifs de lecture optiques, en particulier des dispositifs de lecture optiques pour acquérir une image ou une technologie des capteurs dans le domaine optique visible, dans le domaine optique UV ou dans le domaine optique infrarouge, ou une technologie des capteurs mécaniques ou inductifs dans le domaine de la métrologie physique.

13. Application du tampon de documents (100) selon l'une des revendications précédentes, pour la personnalisation ou pour la vérification de la personnalisation des documents d'identité (103) ou pour l'analyse des données des documents d'identité (103) ou pour la vérification de l'authenticité des documents d'identité (103).

14. Procédé pour avoir accès à des documents d'identité (103) qui peuvent être lus électroniquement et qui sont disposés dans une pluralité de capteurs de traitement (107), chaque capteur de traitement (107) comportant un dispositif d'accès (223) pour avoir accès au document d'identité (103) et une interface de communication (201), qui est associée au dispositif d'accès (223) respectif, pour la communication selon une première technologie de transmission, une interface de communication (201) étant respectivement associée à une interface répartiteur (207) d'un concentrateur (205) comportant un certain nombre d'interfaces de répétiteur (207, 208, 209, 210, 211, 212) pour la communication selon la première technologie de transmission et une interface réseau (215) pour la communication selon une deuxième technologie de transmission,
- un premier signal de communication, qui peut être appliqué à une interface répartiteur (207), selon la première technologie de transmission étant transformé à travers le concentrateur en un deuxième signal de communication selon la deuxième technologie de transmission et le deuxième signal de communication étant mis à disposition à l'interface réseau (215), ou
- un deuxième signal de communication, qui peut être appliqué à l'interface réseau (215), selon la deuxième technologie de transmission étant transformé à travers le concentrateur en un premier signal de communication selon la première technologie de transmission et le premier signal de communication étant délivré à une interface répartiteur (207).
